(19) Europäisches Patentamt
European Patent Office
Office européen des brevets

(11) **EP 1 142 099 B1**

(12) **FASCICULE DE BREVET EUROPEEN**

(45) Date de publication et mention
de la délivrance du brevet:
**21.02.2007  Bulletin 2007/08**

(21) Numéro de dépôt: **99959482.3**

(22) Date de dépôt: **15.12.1999**

(51) Int Cl.:
***H02P 25/10*** *(2006.01)*

(86) Numéro de dépôt international:
**PCT/FR1999/003145**

(87) Numéro de publication internationale:
**WO 2000/038310 (29.06.2000 Gazette 2000/26)**

(54) **PROCEDE DE COMMANDE NUMERIQUE DE MOTEUR UNIVERSEL, NOTAMMENT A USAGE ELECTROMENAGER**

NUMERISCHES STEUERVERFAHREN FÜR UNIVERSALMOTOREN, INSBESONDERE FÜR HAUSHALTSANWENDUNGEN

METHOD FOR DIGITAL CONTROL OF A UNIVERSAL MOTOR, IN PARTICULAR FOR ELECTRICAL HOUSEHOLD APPLIANCE

(84) Etats contractants désignés:
**DE ES FR IT**

(30) Priorité: **18.12.1998  FR 9816001**
**30.06.1999  FR 9908366**

(43) Date de publication de la demande:
**10.10.2001  Bulletin 2001/41**

(73) Titulaire: **CROUZET APPLIANCE CONTROLS S.A.**
**26120 Montelier Chabeuil (FR)**

(72) Inventeur: **FOUREYS, Philippe**
**F-26500 Bourg les Valence (FR)**

(74) Mandataire: **Breese Derambure Majerowicz**
**38, avenue de l'Opéra**
**75002 Paris (FR)**

(56) Documents cités:
**EP-A- 0 404 375      EP-A- 0 575 911**
**EP-A- 0 684 334      EP-A- 0 827 265**
**DE-A- 3 708 479      DE-A- 19 510 394**

• **SAX ET AL.: "Mikrocomputer mit Sensor- und Aktuator-Interface" ELEKTRONIK, vol. 35, no. 14, 11 juillet 1986 (1986-07-11), pages 73-75, XP002114874 München, DE**

Printed by Jouve, 75001 PARIS (FR)

**Description**

La présente invention concerne un procédé de commande numérique de moteur universel, notamment à usage électroménager, et plus particulièrement un tel procédé comprenant les étapes consistant à

mesurer la vitesse de rotation dudit moteur,
déterminer l'écart entre la vitesse mesurée et une vitesse de consigne, et
commander ledit moteur en fonction dudit écart.

Les moteurs universels sont des moteurs monophasés à collecteur à excitation série, et leur utilisation est fréquente dans le domaine des appareils électroménagers, notamment pour l'entraînement des tambours de machines à laver ou à sécher le linge.
La régulation de la vitesse de rotation d'un moteur universel fait intervenir une génératrice tachymétrique accouplée à ce moteur pour fournir en sortie un signal électrique dont la fréquence est proportionnelle à la vitesse, et un triac d'alimentation dont l'angle d'amorçage détermine la tension moyenne appliquée aux enroulements du moteur. Une loi de commande permet d'adapter l'angle d'amorçage en fonction de la vitesse.
On a déjà proposé des procédés de commande numérique. Actuellement, la loi utilisée est très simple puisqu'on adopte un écart d'angle d'amorçage proportionnel à l'écart de vitesse :

$$\alpha_{n+1} = \alpha_n + A.\Delta\omega \qquad\qquad (1)$$

où

$\alpha_i$ est l'angle d'amorçage du triac à l'instant $t_i$
$\Delta\omega$ est l'écart entre la vitesse mesurée par la génératrice tachymétrique et la consigne de vitesse, et
$A$ est un coefficient de proportionnalité.

En outre, il est généralement prévu de limiter le courant dans le moteur. A cet effet, un shunt permet de mesurer ce courant. On peut se référer par exemple au document EP-0 684 334.
Bien que donnant généralement satisfaction, ce procédé présente un certain nombre d'inconvénients.
En premier lieu, il ne fournit aucun accès aux grandeurs physiques autres que celles qui sont directement mesurées, à savoir essentiellement la vitesse de rotation, ainsi éventuellement que le courant dans le moteur. Le procédé connu est donc relativement incomplet.
Par ailleurs, la connaissance du courant nécessite, outre la présence du shunt, celles d'un amplificateur et d'un convertisseur courant/tension. Il en résulte une complication du circuit et par conséquent une augmentation des coûts. En particulier, il ne peut fournir le courant efficace vrai sans moyens de calcul assez importants.
Or, cette connaissance du courant est particulièrement utile dans certaines applications, indépendamment de la nécessité de le limiter, notamment dans le cas de l'entraînement du tambour d'une machine à laver le linge. En effet, dans le cas d'un moteur universel, le couple est directement fonction de ce courant. Et connaissant le couple, on a accès à la charge dans l'hypothèse où le moteur suit les consignes d'accélération.
La charge est une grandeur dont la connaissance permet de réguler la vitesse de façon optimale dans le cas précité de l'entraînement du tambour d'une machine à laver le linge. En effet, l'efficacité du lavage est en grande partie fonction de la vitesse relative entre le linge et l'eau contenue dans le tambour. Or, lorsque la charge est faible, le linge retombe de lui-même dans l'eau de lavage au cours de sa rotation. La loi de commande peut donc avantageusement être adaptée à la charge de la machine.
On connaît également, du document EP-0 827 265, un procédé de commande numérique de moteur universel dans lequel la mesure de la vitesse de rotation permet d'obtenir une consigne de couple, et, du document DE 37 08479, un procédé de commande de moteur électrique à courant continu permettant d'estimer le courant dans les enroulements du moteur.
Toutefois, aucun de ces procédés ne permet de remédier de façon satisfaisante aux inconvénients rappelés ci-dessus.
La présente invention vise à pallier les inconvénients rappelés ci-dessus.
Plus particulièrement, l'invention vise à fournir un procédé de commande numérique de moteur universel, notamment à usage électroménager, qui dispense de l'utilisation du shunt de l'art antérieur.
L'invention vise également à fournir un tel procédé de commande qui permet de tenir compte de la charge du moteur sans nécessiter de mesure du courant.

En outre, l'invention vise à fournir un tel procédé de commande qui permet, dans le cas d'une machine à laver ou à sécher le linge, de tenir compte du balourd créé par une disposition irrégulière de ce dernier.

A cet effet, l'invention a pour objet un procédé de commande numérique de moteur universel, notamment à usage électroménager, suivant la revendication 1.

On verra que l'on peut déduire du couple résistant ($C$) la charge du moteur, ce qui est particulièrement intéressant dans le cas d'un appareil électroménager dans lequel ce paramètre est généralement inconnu de l'utilisateur.

Le procédé selon l'invention peut en outre comprendre l'estimation d'au moins le moment d'inertie ou le coefficient de frottement visqueux.

On peut alors, dans le cas d'un lave-linge, tenir compte d'une disposition irrégulière du linge dans le tambour pour obtenir une vitesse de rotation plus régulière de ce dernier.

Egalement dans un mode de mise en oeuvre particulier, le procédé selon l'invention peut comprendre l'étape consistant à déterminer une estimation, éventuellement optimale, de la vitesse de rotation du moteur.

Egalement dans un mode de mise en oeuvre particulier, il peut comprendre l'étape consistant à déterminer une estimation de la charge du moteur.

De telles estimations permettent en particulier d'assurer une commande optimale tenant compte en outre de la charge et de la température de fonctionnement du moteur.

En particulier, le procédé selon l'invention peut comprendre l'étape consistant à déterminer le rapport cyclique du cycle de fonctionnement du moteur. Par rapport cyclique du cycle de fonctionnement du moteur, on entend ici le rapport du temps de fonctionnement effectif au temps total du cycle, incluant le temps pendant lequel le moteur est à l'arrêt.

Dans un premier mode de mise en oeuvre de l'invention, la régulation de vitesse du moteur est effectuée par tout moyen connu. On peut en particulier déterminer l'angle d'amorçage du triac par une formule telle que la formule (1).

On peut au contraire, dans un autre mode de mise en oeuvre de l'invention, inclure les estimations précitées dans la boucle de régulation. La tension de commande à appliquer au moteur est alors calculée en fonction de ces estimations, et l'angle d'amorçage du triac est déduite de cette tension calculée.

Par conséquent, dans le procédé selon ce mode de réalisation de l'invention, on déterminé non pas directement, et empiriquement, l'angle d'amorçage du triac, mais la tension à appliquer à l'entrée du moteur. Etant en possession de cette tension, on peut en déduire, outre l'angle d'amorçage, divers paramètres de fonctionnement électriques et mécaniques, et ainsi optimiser la commande.

On décrira maintenant, à titre d'exemples non limitatifs, des modes de réalisation particuliers de l'invention, en référence aux dessins schématiques annexés dans lesquels :

- la figure 1 est un schéma d'une machine à laver le linge munie d'un dispositif de commande mettant en oeuvre le procédé selon l'invention ;

- la figure 2 est un schéma bloc de l'asservissement ; et

- la figure 3 est un organigramme du procédé

On commencera par décrire la modélisation du dispositif, puis une loi de commande selon l'invention, et enfin divers types d'estimateurs des paramètres. On décrira ensuite la mise en oeuvre pratique de l'invention, tenant compte en particulier du caractère numérique de la commande.

MODELISATION

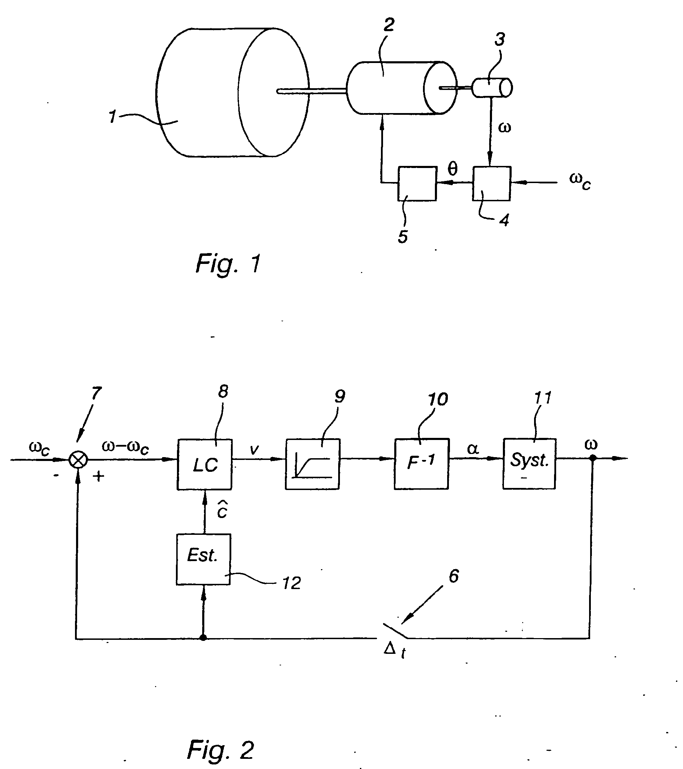

On voit à la figure 1 une machine à laver le linge comprenant un tambour 1 disposé dans une cuve de lavage (non représentée) et entraîné par un moteur universel 2. Une génératrice tachymétrique 3 est montée sur l'arbre du moteur 2 pour fournir à un circuit de commande 4 un signal électrique de fréquence proportionnelle à la vitesse de rotation $\omega$ du moteur.

Le moteur 2 est alimenté à partir du secteur par l'intermédiaire d'un triac 5. Le circuit 4 commande le triac 5 après avoir déterminé l'angle d'amorçage requis $\alpha$ en fonction de la vitesse $\omega$ et d'une consigne de vitesse $\omega_c$. A cet effet, le circuit 4 comporte les circuits nécessaires et notamment un microcontrôleur.

Le moteur universel 2 peut être modélisé par le système des deux équations différentielles suivantes, traduisant respectivement le fonctionnement mécanique et électrique du moteur

$$\begin{cases} J.\dot{\omega} + F.\omega = k_1.i^2 - C & (2) \\ L\dfrac{di}{dt} + Ri + k_2 i.\omega = v & (3) \end{cases}$$

où

$\dot{\omega}$ représente la dérivée de $\omega$ par rapport au temps $\dfrac{d\omega}{dt}$,

$J$ représente l'ensemble des inerties ramenées au moteur,
$F$ est le coefficient de frottement visqueux.
$C$ est le couple résistant comprenant tous les couples non modélisés par ailleurs, notamment les frottements solides et les fluctuations de couple dues au mouvement du linge dans le tambour et au balourd occasionné par une disposition non régulière du linge,
$L$ et $R$ sont respectivement l'inductance et la résistance du moteur,
$i$ et $v$ sont respectivement le courant traversant le moteur et la tension à ses bornes, et
$k_1$ et $k_2$ sont des coefficients constants.

Si l'on fait les hypothèses simplificatrices selon lesquelles le moment d'inertie $J$ est constant et ne dépend donc pas de la masse de linge présente dans le tambour,

les frottements sont des frottements purement visqueux proportionnels à la vitesse,
le terme relatif à l'inductance est négligeable devant les autres termes de la deuxième équation, et
les coefficients $k_1$ et $k_2$ sont sensiblement égaux dans les limites d'utilisation du moteur, ce qui se justifie par le fait qu'ils sont liés à la géométrie du moteur,
on obtient les équations simplifiées suivantes

$$\begin{cases} J.\dot{\omega} + F.\omega = k.i^2 - C & (4) \\ Ri + k.\omega.i = v & (5) \end{cases}$$

où $F$ est une constante.

LOIS DE COMMANDE

Des deux équations (4) et (5) qui précèdent, on déduit que

$$\dot{\omega} = -\frac{F}{J}\omega + \frac{k}{J}\frac{v^2}{(R + k.\omega)^2} - \frac{1}{J}C \qquad (6)$$

Par ailleurs, on veut que la loi de commande rende le comportement du système linéaire, c'est-à-dire qu'elle soit telle que

$$\dot{\omega} = -K.(\omega - \omega_c) \qquad (7)$$

où $K$ est un coefficient à choisir par expérimentation. En d'autres termes, $K$ est l'inverse de la constante de temps de la réduction l'écart entre la vitesse mesurée et la vitesse de consigne $\omega_c$. La valeur de $K$ est choisie de façon à obtenir du système le comportement souhaité en réponse à une commande donnée. Le coefficient $K$ peut d'ailleurs varier en fonction de $\omega_c$.
On obtient ainsi

$$v = \sqrt{\frac{1}{k}\left[- K.J.(\omega - \omega_c) + C + F.\omega\right] * (R + k.\omega)} \qquad (8)$$

qui est la loi de commande donnant la tension $v$ à appliquer au moteur en fonction de la vitesse de rotation mesurée $\omega$, de la vitesse de consigne $\omega_c$, et du couple résistant $C$.

On peut introduire en outre un effet intégral en ajoutant l'état $y$ tel que

$$\dot{y} = \omega - \omega_c \qquad (9)$$

ce qui conduit à la loi de commande

$$v = \sqrt{\frac{1}{k}\left[- K.J.(\omega - \omega_c) + C + F.\omega - K_1.y\right] * (R + k.\omega)} \qquad (10)$$

Bien entendu, cette relation n'est utilisable que si

$$- K.J.(\omega - \omega_c) + C + F.\omega - K_1.y \geq 0 \qquad (11)$$

ce qui ne se produit que pour des valeurs de la vitesse de rotation supérieures à une certaine limite, fonction elle-même, d'ailleurs, de l'écart de vitesse et de sa dérivée.

Dans le cas contraire, on adoptera pour loi de commande

$$v = \sqrt{\frac{1}{k}\left[C + F.\omega - K_1.y\right] * (R + k.\omega)} \qquad (12)$$

Cette dernière n'est elle-même valide que si

$$C + F.\omega - K_1.y \geq 0 \qquad (13)$$

Enfin, si cette dernière égalité n'est pas satisfaite, on prendra

$$v = \sqrt{\frac{1}{k}\left[F.\omega - K_1.y\right] * (R + k.\omega)} \qquad (14)$$

On verra ci-après qu'il n'est pas indispensable de supposer que $J$ et $F$ sont des constantes, sous réserve d'introduire dans la description du système des états supplémentaires correspondants.

ESTIMATEURS DES PARAMETRES

Quelle que soit la loi de commande adoptée, il est nécessaire d'obtenir une estimation $\hat{C}$ du couple résistant, c'est à dire de réaliser un estimateur du couple. Plus généralement, on pourra chercher à estimer les valeurs de tous les paramètres non supposés constants.

On décrira deux approches permettant d'obtenir un tel estimateur. La première approche consiste à minimiser une énergie liée à l'écart entre les valeurs réelles des paramètres et leur valeur estimée. L'autre approche revient à appliquer les équations d'état aux valeurs estimées des paramètres.

Première approche

On se place tout d'abord dans le cadre de l'hypothèse précédente, où le moment d'inertie $J$ et le coefficient de frottement $F$ sont supposés constants et connus. On réalise un estimateur intégral, sous la forme

$$\dot{\hat{C}}_0 = -K'.J.(\omega - \omega_c) \qquad (15)$$

En d'autres termes, on réajuste l'estimation en fonction de l'écart observé entre la vitesse mesurée et la vitesse de consigne.
La valeur de $K'$ est choisie de manière que l'estimateur se comporte de la manière voulue.
Si au contraire, on suppose maintenant que le moment d'inertie $J$ et le coefficient de frottement visqueux $F$ ne sont plus des constantes, on les remplace par leurs estimations, respectivement $\hat{J}$ et $\hat{F}$.
On pose alors

$$\hat{J}.\dot{\omega} + \hat{F}.\omega = \frac{k.v^2}{(R + k.\omega)^2} - \hat{C} \qquad (16)$$

ce qui donne

$$\hat{J}.\dot{\omega}_c + \hat{F}.\omega_c = \frac{k.v^2}{(R + k.\omega)^2} - \hat{C} + K.\tilde{\omega} \qquad (17)$$

où $\tilde{\omega}$ est l'erreur sur l'estimation $\hat{\omega}$ :

$$\tilde{\omega} = \hat{\omega} - \omega \qquad (18)$$

On obtient ainsi la loi de commande générale

$$v = \sqrt{\frac{\hat{F}.\omega_c + \hat{C} - K.\tilde{\omega} + \hat{J}.\dot{\omega}_c}{k}} * (R + k.\omega) \qquad (19)$$

Comme précédemment, cette loi de commande n'est valide que si

$$\frac{\hat{F}.\omega_c + \hat{C} - K.\tilde{\omega} + J.\dot{\omega}_c}{k} \geq 0 \qquad (20)$$

Si ce test n'est pas satisfait, on adopte alors les mêmes lois de commande que ci-dessus.
On prend alors pour estimer les différents termes

$$\begin{cases} \dot{\hat{C}} = -\dfrac{1}{\tau_1}\widetilde{\omega} & (21) \\[2mm] \dot{\hat{F}} = -\dfrac{1}{\tau_2}\omega_c.\widetilde{\omega} & (22) \\[2mm] \dot{\hat{J}} = -\dfrac{1}{\tau_3}(\dot{\omega})_c.\widetilde{\omega} & (23) \end{cases}$$

Deuxième approche

On supposera dans un premier temps que le couple moyen $C_0$ est constant en régime permanent et par conséquent que $\dot{C}_0 = 0$. Si l'on considère $C$ comme un état supplémentaire, on écrit

$$\begin{cases} \dot{\omega} = -\dfrac{F}{J}\omega - \dfrac{1}{J}C + \dfrac{k}{J}\dfrac{v^2}{(R+k.\omega)^2} & (24) \\[3mm] \dot{C} = 0 & (25) \end{cases}$$

On définit l'estimateur de la vitesse angulaire $\hat{\omega}$ et du couple résistant $\hat{C}$ par les équations suivantes

$$\begin{cases} \dot{\hat{\omega}} = -\dfrac{F}{J}\hat{\omega} - \dfrac{1}{J}\hat{C} + \dfrac{k}{J}\dfrac{v^2}{(R+k.\omega)^2} + L_1(\omega-\hat{\omega}) & (26) \\[3mm] \dot{\hat{C}} = L_2(\omega-\hat{\omega}) & (27) \end{cases}$$

ce qui revient à estimer à la fois $\omega$ et $C$ en utilisant l'information d'écart $\widetilde{\omega}$
Si $\widetilde{\omega}$ et $\widetilde{C}$ sont les erreurs sur ces estimations, on déduit des équations (24) à (27)

$$\begin{cases} \dot{\widetilde{\omega}} = -\dfrac{F}{J}\widetilde{\omega} - \dfrac{1}{J}\widetilde{C} - L_1(\omega-\hat{\omega}) & (28) \\[3mm] \dot{\widetilde{C}} = -L_2(\omega-\hat{\omega}) & (29) \end{cases}$$

où $L_1$ et $L_2$ sont les gains de l'estimateur.
On en déduit une matrice $\Lambda$ telle que

$$\begin{pmatrix} \dot{\widetilde{\omega}} \\ \dot{\widetilde{C}} \end{pmatrix} = \Lambda.\begin{pmatrix} \widetilde{\omega} \\ \widetilde{C} \end{pmatrix} \qquad (30)$$

où la matrice $\Lambda$ est définie par

$$\Lambda = \begin{pmatrix} -\dfrac{F}{J} - L_1 & -\dfrac{1}{J} \\ -L_2 & 0 \end{pmatrix} \tag{31}$$

Soit $P$ le polynôme caractéristique de l'estimateur

$$P = \det[\lambda.I - \Lambda] = \lambda^2 - \lambda.\left(-\dfrac{F}{J} - L_1\right) - \dfrac{L_2}{J} = (\lambda - p_1)(\lambda - p_2) \tag{32}$$

$p_1$ et $p_2$ étant les pôles de l'erreur de l'estimateur qui doivent assurer la convergence vers 0 de l'erreur d'estimation. Ces pôles sont choisis de manière à obtenir la meilleure estimation et on en déduit les gains $L_1$ et $L_2$ par.

$$\begin{cases} L_1 = -(p_1 + p_2) - \dfrac{F}{J} & (33) \\ L_2 = -p_1.p_2.J & (34) \end{cases}$$

On considérera maintenant, au contraire, que le couple résistant est la somme d'un couple moyen $\overline{C}_0$ constant en régime permanent et d'un oscillateur $z$ dont on déterminera l'amplitude et le déphasage de manière que la commande s'oppose au balourd créé par la masse de linge mouillé. On supposera à cet effet que le balourd est un signal sinusoïdal dont la pulsation est égale à la pulsation moyenne du tambour.
On pose donc

$$\hat{C} = \overline{C}_0 + z \tag{35}$$

avec

$$\ddot{z} + \omega^2.z = 0 \tag{36}$$

ou

$$\dot{z} = z_1 \tag{37}$$

$$\dot{z}_1 = -\omega^2.z \tag{38}$$

Si l'on ajoute au système les trois états supplémentaires $C$, $z$ et $z_1$, on écrit

$$\begin{cases} \dot{\omega} = -\dfrac{F}{J}\omega - \dfrac{1}{J}C_0 - \dfrac{1}{J}z + \dfrac{k}{J}\dfrac{v^2}{(R+k.\omega)^2} & (39)\\[2mm] \dot{C} = 0 & (40)\\[2mm] \dot{z} = z_1 & (41)\\[2mm] \dot{z}_1 = -\omega^2.z & (42) \end{cases}$$

On peut donc écrire l'estimateur

$$\begin{cases} \dot{\hat{\omega}} = -\dfrac{F}{J}\hat{\omega} - \dfrac{1}{J}\hat{C}_0 - \dfrac{1}{J}\hat{z} + \dfrac{k}{J}\hat{i}^2 + L_1(\omega - \hat{\omega}) & (43)\\[2mm] \dot{\hat{C}}_0 = L_2(\omega - \hat{\omega}) & (44)\\[2mm] \dot{\hat{z}} = \hat{z}_1 + L_3(\omega - \hat{\omega}) & (45)\\[2mm] \dot{\hat{z}}_1 = -\omega^2.\hat{z} + L_4(\omega - \hat{\omega}) & (46) \end{cases}$$

Comme précédemment, on écrit les erreurs sur les estimations sous la forme

$$\begin{pmatrix} \dot{\tilde{\omega}} \\ \dot{\tilde{C}} \\ \dot{\tilde{z}} \\ \dot{\tilde{z}}_1 \end{pmatrix} = \Lambda.\begin{pmatrix} \tilde{\omega} \\ \tilde{C} \\ \tilde{z} \\ \tilde{z}_1 \end{pmatrix} \qquad (47)$$

avec

$$\Lambda = \begin{pmatrix} -\dfrac{F}{J} - L_1 & -\dfrac{1}{J} & -\dfrac{1}{J} & 0 \\[2mm] -L_2 & 0 & 0 & 0 \\[2mm] -L_3 & 0 & 0 & 1 \\[2mm] -L_4 & 0 & -\omega^2 & 0 \end{pmatrix} \qquad (48)$$

Le polynôme caractéristique de la matrice $\Lambda$ est

$$P = \det[\lambda.I - \Lambda] =$$
$$\lambda^4 + \frac{L_1.J + F}{J}\lambda^3 + \frac{-L_3 - L_2 + J.\omega^2}{J}\lambda^2 + \frac{L_1.J.\omega^2 - L_4 + F.\omega^2}{J}\lambda$$
$$+ \frac{-L_2.\omega^2}{J} \qquad (49)$$
$$= (\lambda - p_1)(\lambda - p_2)(\lambda - p_3)(\lambda - p_4)$$

On choisit comme précédemment les pôles $p_1$ à $p_4$ de l'erreur de l'estimateur en fonction de la réponse souhaitée et on en déduit les gains par

$$
\begin{cases}
L_1 = p_1 - \dfrac{F}{J} & (50) \\[2mm]
L_2 = -\dfrac{J}{\omega^2}\, p_4 & (51) \\[2mm]
L_3 = -J \cdot p_2 + \dfrac{J}{\omega^2}\, p_4 + J.\omega^2 & (52) \\[2mm]
L_4 = J.\omega^2 . p_1 - J . p_3 + F.\omega^2 - J.\omega\,\dfrac{F}{J} & (53)
\end{cases}
$$

MISE EN OEUVRE

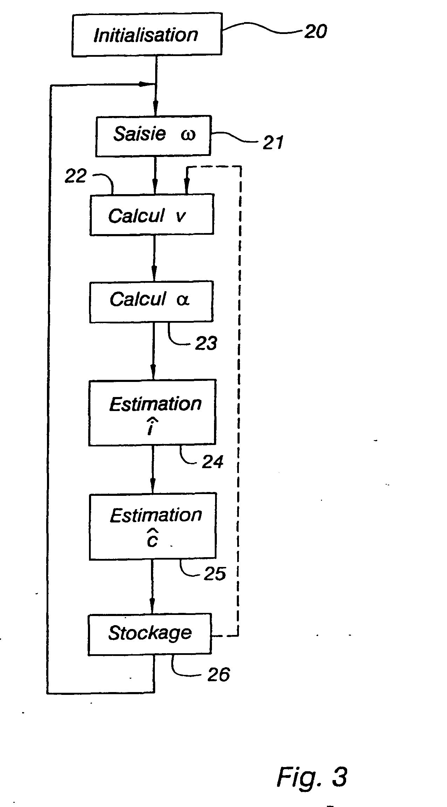

On décrira maintenant, en référence au schéma bloc de la figure 2 et à l'organigramme de la figure 3, un mode de mise en oeuvre particulier de l'invention.

On voit à la figure 2 un échantillonneur 6 qui échantillonne les valeurs de la vitesse $\omega$ à des intervalles de temps $\Delta_t$. De ces échantillons de vitesse sont retranchés les valeurs successives de la consigne de vitesse $\omega_c$, dans un soustracteur 7. L'écart de vitesse $w-\omega_c$ est appliqué à l'entrée du bloc 8 établissant la loi de commande, qui détermine la tension $v$ à appliquer au moteur 2. Un limiteur de tension 9 est toutefois disposé en aval du bloc 8 pour limiter la tension à des valeurs acceptables par le moteur 2.

Un bloc 10 détermine, à partir de la valeur de la tension éventuellement limitée, l'angle $\alpha$ d'amorçage du triac 5.

Compte tenu de ses caractéristiques mécaniques et électriques, le système 11, comprenant pour l'essentiel le lave-linge et son contenu, adopte la vitesse $\omega$.

La vitesse échantillonnée est également utilisée dans l'estimateur 12 pour fournir le couple estimé $\hat{C}$. Cette estimation est elle-même fournie au bloc 8 pour le calcul de la tension à appliquer au moteur 2.

On observera que, comme cela à été mentionné précédemment, l'estimateur 12 pourrait également estimer le coefficient de frottement $F$ et le moment d'inertie $J$ si ces derniers n'étaient pas considérés comme constants. Les valeurs $\hat{F}$ et $\hat{J}$ seraient alors dans ce cas également fournies au bloc de calcul 8.

On observera également que le soustracteur 7 reçoit directement en entrée la vitesse mesurée $\omega$. On pourrait toutefois concevoir d'estimer cette vitesse avec un estimateur optimal tel qu'un filtre de Kalman.

On se référera maintenant à la figure 3.

L'étape 20 du procédé consiste à initialiser les différentes valeurs des paramètres à la mise en marche du dispositif. Cette étape n'est évidemment pas réitérée aux cycles suivants.

Chaque cycle, d'une durée $\Delta_t$ égale à la période d'échantillonnage, commence par la saisie de la vitesse de rotation $\omega$ en 21 et le calcul de la tension $v_t$ à appliquer au moteur en 22. Ce calcul est effectué par exemple à partir des équations (10) à (14), en remplaçant dans ces équations la vitesse $\omega$ par la vitesse mesurée $\omega_t$, et le couple $C$ par le couple $\hat{C}$ estimé au cycle précédent.

A partir de $v_t$, on détermine en 23 l'angle d'amorçage $\alpha_t$, par une formule du type

$$
\alpha_t = F^{-1}(v_t) \tag{54}
$$

qui peut par exemple définir une relation linéaire, dont les coefficients seront déterminés par expérimentation.

On estime ensuite le courant en 24 par l'équation

$$
\hat{i}_t = \frac{v_t}{R + k.\omega_t} \tag{55}
$$

puis en 25 le couple, par les équations suivantes dérivées des équations (26) et (27)

$$\begin{cases} \hat{\omega}_{t+1} = \left[ 1 - \Delta_T \left( \frac{F}{J} + L_2 \right) \right] . \hat{\omega}_t - \frac{\Delta_T}{J} \hat{C}_t + \frac{k.\Delta_T}{J} \hat{i}^2 + \Delta_T . L_1 . \omega_t \qquad (56) \\ \hat{C}_{t+1} = \hat{C}_t + \Delta_T . L_2 \left( \omega_t - \hat{\omega}_t \right) \qquad (57) \end{cases}$$

où L1 et L2 sont déterminés par les relations (33) et (34).

En 26, les estimations nouvellement calculées $\omega_{t+1}$ et $\hat{C}_{t+1}$ sont stockées à la place de $\hat{\omega}_t$ et $\hat{C}_t$ et un nouveau cycle peut commencer.

Grâce à l'estimation de l'intensité $i$, on peut limiter le courant dans les enroulements du moteur. Si en effet l'estimation dépasse une valeur critique, on modifie l'angle d'amorçage $\alpha$ de manière à ramener le courant à une valeur acceptable. On remarquera que l'on peut ainsi contrôler le courant sans le mesurer, ce qui était un des objectifs de l'invention. Par ailleurs, on n'a pas tenu compte ici du facteur $L \dfrac{di}{dt}$. Une telle prise en compte ne présenterait toutefois pas de difficulté particulière si la précision de l'estimation l'exigeait.

Le fait de disposer de valeurs estimées pour le courant et pour le couple présente de nombreux avantages.

En ce qui concerne le courant, il permet de déterminer l'énergie dissipée $R.i^2$ et par conséquent d'estimer également la température du moteur. On peut en tenir compte pour déterminer le rapport cyclique du cycle de fonctionnement du moteur.

L'estimation du couple fournit également une estimation de la charge de la machine. Là encore, on peut utiliser cette information pour déterminer le rapport cyclique précité. Une optimisation de ce rapport cyclique peut d'ailleurs être recherchée en fonction à la fois des estimations de température et de charge.

## Revendications

1. Procédé de commande numérique de moteur universel, notamment à usage électroménager, alimenté en courant alternatif à partir d'un triac comprenant les étapes consistant à mesurer (21) la vitesse de rotation ($\omega$) dudit moteur, à déterminer, (24) la tension à appliquer au moteur, à estimer (25) le couple résistant (C), à déterminer l'écart entre la vitesse mesurée et une vitesse de consigne et commander l'angle d'amorçage dudit triac en fonction dudit écart **caractérisé par le fait que** l'estimation du couple résistant (C) comprend l'estimation de la somme d'un couple moyen sensiblement constant et d'un oscillateur de balourd et qu'il comprend en outre au moins une étape (24) d'estimation du courant (i) dans les enroulements du moteur.

2. Procédé de commande numérique de moteur universel selon la revendication 1, dans lequel la détermination (22) de la tension à appliquer au moteur comprend en outre l'estimation d'au moins le moment d'inertie ($J$) ou le coefficient de frottement visqueux ($F$).

3. Procédé de commande numérique de moteur universel selon l'une quelconque des revendications 1 à 2, comprenant l'étape consistant à déterminer une estimation de la vitesse de rotation du moteur.

4. Procédé de commande numérique de moteur universel selon l'une quelconque des revendications 1 à 3, comprenant l'étape consistant à déterminer une estimation de la charge du moteur.

5. Procédé de commande numérique de moteur universel selon l'une quelconque des revendications 1 à 4, comprenant l'étape consistant à déterminer le rapport cyclique du cycle de fonctionnement du moteur.

6. Procédé de commande numérique de moteur universel selon l'une quelconque des revendications 1 à 5, comprenant les étapes consistant à calculer en fonction desdites estimations la tension de commande à appliquer au moteur, et à déduire l'angle d'amorçage du triac de cette tension calculée.

## Claims

1. A method for the numeric control of a universal motor, in particular for domestic electrical usage, supplied with AC current from a triac, comprising the steps consisting of measuring (21) the speed of rotation ($\omega$) or the said motor, determining (24) the voltage to be applied to the motor, estimating (25) the torque (C), determining the difference between the measured speed and a reference speed and controlling the firing angle of the said triac according to the said difference, **characterised by** the fact that the estimation of the torque (C) comprises the estimation of the sum of a substantially constant average torque and an unbalanced oscillator and that it also comprises at least one step (24) of estimating the current (i) in the motor windings.

2. A method for the numeric control of a universal motor according to Claim 1, in which the determination (22) of the voltage to be applied to the motor also comprises the estimation of at least the moment of inertia (J) or the coefficient of viscous friction (F).

3. A method for the numeric control of a universal motor according to either one of Claims 1 to 2, comprising the step consisting of determining an estimation of the speed of rotation of the motor.

4. A method for the numeric control of a universal motor according to any one of Claims 1 to 3, comprising the step consisting of determining an estimation of the load on the motor.

5. A method for the numeric control of a universal motor according to any one of Claims 1 to 4, comprising the step consisting of determining the duty cycle ratio of the operating cycle of the motor.

6. A method for the numeric control of a universal motor according to any one of Claims 1 to 5, comprising the step consisting of calculating, according to the said estimations, the control voltage to be applied to the motor, and deducing the firing angle of the triac from this calculated voltage.

**Patentansprüche**

1. Digitales Steuerungsverfahren eines universalen Motors, insbesondere zum Gebrauch für Haushaltsgeräte, der mit Wechselstrom ab einem Triac versorgt wird, mit den aus der Messung (21) der Rotationsgeschwindigkeit (ω) des genannten Motors, der Bestimmung (24) der auf den Motor anzuwendenden Spannung, der Schätzung (25) des Gegenmoments (C), der Bestimmung der Abweichung zwischen der gemessenen Geschwindigkeit und einer Referenzgeschwindigkeit und der Steuerung des Zündungswinkels des genannten Triacs in Abhängigkeit von der genannten Abweichung bestehenden Stufen, **gekennzeichnet durch** die Tatsache, dass die Schätzung des Gegenmoments (C) die Schätzung der Summe eines deutlich konstanten mittleren Moments und eines Unwuchtoszillators umfasst und dass es darüber hinaus wenigstens eine Schätzungsstufe (24) des Stroms (i) in den Wicklungen des Motors umfasst.

2. Digitales Steuerungsverfahren eines universalen Motors gemäß Anspruch 1, in dem die Bestimmung (22) der auf den Motor anzuwendenden Spannung darüber hinaus die Schätzung von wenigstens dem Trägheitsmoment (J) oder dem viskosen Reibungskoeffizienten (F) umfasst.

3. Digitales Steuerungsverfahren eines universalen Motors gemäß Anspruch 1 bis 2 mit der in der Bestimmung einer Schätzung der Rotationsgeschwindigkeit des Motors bestehenden Stufe.

4. Digitales Steuerungsverfahren eines universalen Motors gemäß Anspruch 1 bis 3, mit der aus der Bestimmung einer Schätzung der Auslastung des Motors bestehenden Stufe.

5. Digitales Steuerungsverfahren eines universalen Motors gemäß Anspruch 1 bis 4, mit der aus der Bestimmung des zyklischen Verhältnisses des Betriebszyklus des Motors bestehenden Stufe.

6. Digitales Steuerungsverfahren eines universalen Motors gemäß Anspruch 1 bis 5, mit den in der Berechnung der auf den Motor anzuwendenden Steuerungsspannung und der Folgerung des Zündungswinkels des Triacs von dieser berechneten Spannung in Abhängigkeit der genannten Schätzungen bestehenden Stufe.

Fig. 1

Fig. 2

Fig. 3